# FASCICULE DE BREVET EUROPEEN

(11) **EP 3 675 562 B1**
(45) Date de publication et mention de la délivrance du brevet: **16.11.2022**
(21) Numéro de dépôt: 19219228.4
(22) Date de dépôt: 23.12.2019
(51) Int. Cl.: H04W 40/24, H04W 40/22, H04W 84/18

(54) **PROCÉDÉS DE TRAITEMENT DE DONNÉES, DANS UN RÉSEAU AD HOC DE RADIOCOMMUNICATION, STATIONS MOBILES DE RADIOCOMMUNICATION ET PROGRAMMES D'ORDINATEUR ASSOCIÉS**
DATENVERARBEITUNGSVERFAHREN IN EINEM AD-HOC-FUNKNETZ, ENTSPRECHENDE MOBILE FUNKSTATIONEN UND COMPUTERPROGRAMME
DATA PROCESSING METHODS IN AN AD HOC RADIO COMMUNICATION NETWORK, ASSOCIATED MOBILE RADIO COMMUNICATION STATIONS AND COMPUTER PROGRAMS

(30) Priorité: 27.12.2018 FR 1874209
(43) Date de publication de la demande: 01.07.2020
(73) Titulaire: Thales, 92400 Courbevoie (FR)
(72) Inventeur: ROUGIER, Franck, 92622 GENNEVILLIERS CEDEX (FR); MENJOULOU, Philippe, 92622 GENNEVILLIERS CEDEX (FR); DELATTRE, Michel, 92622 GENNEVILLIERS CEDEX (FR); DERAMBURE, Carole, 92622 GENNEVILLIERS CEDEX (FR)
(74) Mandataire: Lavoix

(56) Documents cités:
- US-A1- 2010 254 309
- LAMONT L ET AL: "HOLSR: a hierarchical proactive routing mechanism for mobile ad hoc networks", IEEE COMMUNICATIONS MAGAZINE, IEEE SERVICE CENTER, PISCATAWAY, US, vol. 43, no. 7, 1 juillet 2005 (2005-07-01), pages 118-125, XP011136632, ISSN: 0163-6804
- SILVESTRI S ET AL: "Inferring Network Topologies in MANETs Applied to Service Redeployment", 2015 24TH INTERNATIONAL CONFERENCE ON COMPUTER COMMUNICATION AND NETWORKS (ICCCN), IEEE, 3 août 2015 (2015-08-03), pages 1-8, XP033225838, DOI: 10.1109/ICCCN.2015.7288419

## Description

La présente invention concerne le traitement des données, dans un réseau ad hoc de radiocommunication comprenant un ensemble de stations de radiocommunication constituant chacune un nœud du réseau ad hoc.

### ARRIÈRE -PLAN DE L'INVENTION

De manière connue, un réseau ad hoc est dépourvu d'infrastructure fixe. Les stations de radiocommunication, équipées de moyens d'émission et/ou réception radio et opérant conformément à des protocoles adéquats, forment les nœuds du réseau et communiquent entre elles par l'intermédiaire d'un canal radio, ou de plusieurs canaux radio, partagé(s).

Un réseau ad hoc est notamment utilisé pour mettre en oeuvre des communications tactiques entre des équipes militaires mobiles, par exemple dotées chacune d'une station de radiocommunication.

Les réseaux MANET (« Mobile Ad Hoc NETwork ») sont des réseaux autoconstitués sur détection d'un signal radioélectrique entre plusieurs nœuds. Un signal est émis par chaque nœud dans toutes les directions et peut être reçu ou pas, en fonction du contexte de mobilité des nœuds et de l'environnement de propagation. Chaque nœud connaît, via un protocole de routage, la topologie du réseau : i.e. la liste des nœuds et la liste des sous-réseaux qui constituent l'espace de routage. La constitution de cet espace de routage ainsi que sa topologie interne peuvent évoluer au cours du temps. Pour maintenir la connaissance de l'état de la topologie du réseau à jour, une fonction dite de découverte dynamique du réseau est mise en œuvre par chaque nœud.

Une fois la topologie établie et entretenue via les protocoles dédiés de niveau bas, les applicatifs s'exécutant au niveau des nœuds peuvent échanger des données par des protocoles de niveau supérieur. Selon les capacités des formes d'onde, les échanges peuvent se faire en diffusion, en point à point ou en point à multipoints.

Ainsi, la présente invention concerne plus spécifiquement un procédé de traitement de données, dans un réseau ad hoc de radiocommunication comprenant un ensemble de stations de radiocommunication constituant chacune un nœud du réseau ad hoc, selon lequel :
- au moins une station exécute une fonction de découverte dynamique de topologie selon un protocole de routage mis en œuvre dans le réseau ad hoc, comprenant l'émission depuis la station d'un ensemble d'éléments de topologie destiné à la mise à jour de la topologie du réseau ; et
- au moins un applicatif génère des données applicatives destinées à être transmises par ladite station à destination d'au moins une autre station du réseau.

Les réseaux ad hoc ont généralement les caractéristiques suivantes : débit faible, voire très faible, temps d'accès à la ressource relativement long (plusieurs secondes à plusieurs dizaines de secondes), et connexité entre les membres non permanente (participants isolés, scission de réseaux, liens intermittents...).

Les échanges de données applicatifs nécessitent des entêtes et des accès dédiés au canal, ce qui ralentit les échanges et augmente l'utilisation de la bande passante. L'arrivée d'un nouveau participant dans les réseaux nécessite la convergence des protocoles de découverte de topologie pour informer les nœuds déjà déployés, puis l'envoi explicite d'informations depuis les applicatifs vers ce nouvel entrant tardif, ce qui augmente significativement la consommation de bande passante. En cas de non connexité d'un destinataire, l'émetteur doit en être informé pour pouvoir ré-émettre l'information lorsque le destinataire est de nouveau joignable. Par ailleurs:
- la demande de Brevet US 2010/254309,
- le document LAMONT L ET AL: "HOLSR: a hierarchical proactive routing mechanism for mobile ad hoc networks", IEEE COMMUNICATIONS MAGAZINE, IEEE SERVICE CENTER, PISCATAWAY, US, vol. 43, no. 7, 1 juillet 2005 (2005-07-01), pages 118-12,
- le document SILVESTRI S ET AL: "Inferring Network Topologies in MANETs Applied to Service Redeployment", 2015 24TH INTERNATIONAL CONFERENCE ON COMPUTER COMMUNICATION AND NETWORKS (ICCCN), IEEE, 3 août 2015 (2015-08-03), pages 1-8 fournissent des enseignements complémentaires sur le contexte de la présente demande.

### OBJET DE L'INVENTION

Le but de l'invention est alors de contribuer à réduire ces inconvénients.

### RÉSUMÉ DE L'INVENTION

A cet effet, suivant un premier aspect, l'invention propose un procédé de traitement de données selon la revendication 1.

Des informations sont ainsi véhiculées au moyen d'éléments fictifs de la topologie (ex : le statut embarqué d'un soldat dans un véhicule qui une fois dans le véhicule a éteint sa station).

Un élément de topologie est un élément manipulé par un protocole de découverte de topologie réseau (un nœud, un lien, un (sous-)réseau, un attribut de ces éléments comme un débit pour un lien, ...). Un élément de topologie est dit fictif lorsqu'il ne correspond à aucun élément de la topologie réelle. Selon cette définition et pour ces éléments de topologie :
- un nœud fictif est un nœud qui n'est pas présent dans la topologie réelle considérée (nœud supplémentaire sans instanciation physique) ;
- un sous-réseau fictif est un sous-réseau qui n'est pas présent dans la topologie réelle considérée (sous-réseau supplémentaire sans instanciation physique) ;
- un lien fictif est un lien qui n'est pas présent dans la topologie réelle considérée (lien supplémentaire sans instanciation physique). Les deux nœuds ainsi que le sous-réseau constituant le lien peuvent être réels ou fictifs ;
- un attribut associé à un lien est fictif si la valeur qui lui est donnée ne correspond pas à la valeur qu'il devrait avoir compte-tenu des caractéristiques réelles du lien.

L'invention permet ainsi de réduire la consommation de bande passante et d'améliorer la disponibilité de services applicatifs dans les réseaux mobiles ad hoc, notamment :
- d'accélérer certains échanges applicatifs en profitant des mécanismes de découverte de topologie, sans les modifier (pas de champs supplémentaires, pas d'évolution des structures) ;
- de décharger les applicatifs des tâches de répétition des envois liés aux changements de topologie fréquents dans les situations de réseaux ad hoc (entrée tardive, connexité intermittente, scission/fusion de réseau ...) ;
- de réduire la charge de transmission de données en évitant le recours aux protocoles applicatifs pour des informations « courtes » (statut,...).

Dans des modes de réalisation, le procédé de traitement de données est selon la revendication 2.

Suivant un deuxième aspect, la présente invention propose un programme d'ordinateur selon la revendication 3.

Suivant un troisième aspect, l'invention propose un procédé de traitement de données selon la revendication 4.

Suivant un quatrième aspect, la présente invention propose un programme d'ordinateur selon la revendication 5.

Suivant un cinquième aspect, la présente invention propose une station de radiocommunication selon la revendication 6.

Suivant un sixième aspect, la présente invention propose une station de radiocommunication selon la revendication 7.

### BRÈVE DESCRIPTION DES DESSINS

Ces caractéristiques et avantages de l'invention apparaîtront à la lecture de la description qui va suivre, donnée uniquement à titre d'exemple, et faite en référence aux dessins annexés, sur lesquels :
- la figure 1 représente un réseau ad hoc dans un mode de réalisation de l'invention ;
- la figure 2 est une vue schématique d'une station de radiocommunication du réseau dans un mode de réalisation de l'invention ;
- la figure 3 est un organigramme d'étapes mises en œuvre dans un mode de réalisation de l'invention ;
- la figure 4 est un organigramme d'étapes mises en œuvre dans un mode de réalisation de l'invention ;
- la figure 5 illustre la mise en œuvre de l'invention dans un réseau ad hoc dans un mode de réalisation.

### DESCRIPTION DÉTAILLÉE DE L'INVENTION

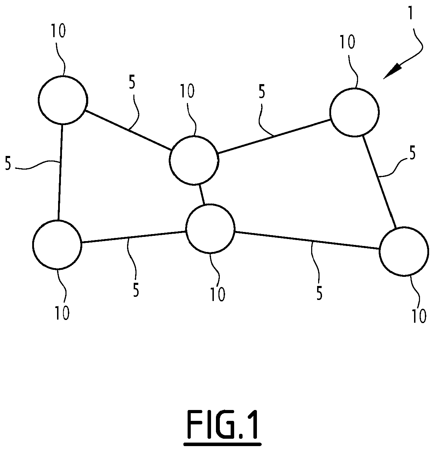

Un réseau de radiocommunication ad hoc 1 de type MANET (« Mobile Ad Hoc NETwork ») est représenté sur la figure 1. Le réseau ad hoc 1 comporte une pluralité de stations de radiocommunication 10.

Dans un mode de réalisation, certaines au moins des stations sont mobiles, ce qui occasionne des évolutions fréquentes de la topologie du réseau 1 et des tables de routage des stations.

Chacune de ces stations 10 est adaptée pour constituer un nœud du réseau ad hoc 1, qui peut être nœud terminal, c'est-à-dire source initiale ou destinataire final d'un message de données, ou nœud intermédiaire pour la réception et la retransmission d'un message de données le long d'un chemin de routage entre une source initiale et un destinataire final du message de données.

Chaque station 10 est adaptée pour recevoir, via son antenne radiofréquence, et pour traiter, des signaux radio fréquence en provenance d'un nœud voisin avec lequel une liaison radio 5 est établie, basée sur un canal radio partagé, et pour émettre des signaux radio fréquence. Ces signaux radio véhiculent des données, par exemple des informations de signalisation, des données destinées aux blocs applicatifs des stations ou encore des données relatives au contrôle (routage etc.) du réseau 1.

Dans un mode de réalisation, les signaux radiofréquence échangés sont conformes au protocole IEEE 802.11 ou à des protocoles non standardisés en vigueur dans le domaine des radiocommunications militaires, et comportent par exemple des données de communications vocales, vidéo, des messages de type SMS, MMS ou de messagerie instantanée.

Certains de ces nœuds peuvent jouer un rôle particulier de passerelle dans la topologie du réseau par exemple pour assurer le relayage de données entre des nœuds ne se trouvant pas sur les mêmes sous-réseaux du réseau 1.

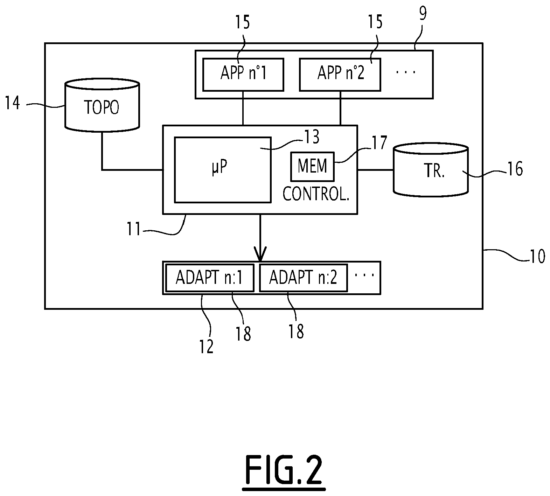

En référence à la figure 2, chaque station de radiocommunication 10 comporte un bloc de traitement 12 relié à une ou plusieurs antennes de la station 10 et adapté pour constituer un nœud du réseau ad hoc 10.

La station 10 comprend en outre une table de topologie du réseau 14, nommé TOPO, comprenant des éléments de topologie élaborés via un ou plusieurs protocoles de découverte de topologie.

De façon connue, le bloc de traitement 12 comporte les éléments nécessaires aux transmissions sur un ou plusieurs médias MED n°1, MED n°2... Chaque média MED n°1, respectivement MED n°2... dispose de ses propres éléments d'adaptation 18, respectivement ADAPT n°1, ADAPT n°2. Ces éléments sont un émetteur radiofréquence, un récepteur radiofréquence, un modulateur, un démodulateur, un amplificateur de puissance, un convertisseur analogique/numérique et un convertisseur numérique/analogique.

Dans un mode de réalisation, la station 10 comprend un bloc de contrôle 11.

De façon connue, le bloc de contrôle 11 est adapté pour mettre en œuvre les fonctions de découverte et d'entretien de la topologie réseau.

Dans un mode de réalisation, chaque nœud correspond à une architecture en couches; celles réparties dans les deux blocs de contrôle 11 et de traitement 12 correspondent par exemple aux couches 1 et 2 du modèle OSI (en anglais Open Systems Interconnection) pour le bloc 12 et à la couche 3 du modèle OSI pour le bloc 11, le tout offrant une couche physique, une couche de liaison de données, et une couche de réseau (comprenant le routage). Par couche, on entend un ensemble des moyens matériels ou logiciels pour la mise en œuvre de la fonction correspondante.

Dans le mode de réalisation considéré, certaines des stations de radiocommunication 10 comportent en outre un bloc applicatif 9, comprenant une ou des applications 15 : APP n°1, APP n°2 etc, dont certains peuvent avoir besoin d'échanger des données utiles entre eux.

Dans un mode de réalisation, l'architecture du bloc applicatif 9 correspond à des couches hautes, par exemple 4 à 7 du modèle OSI.

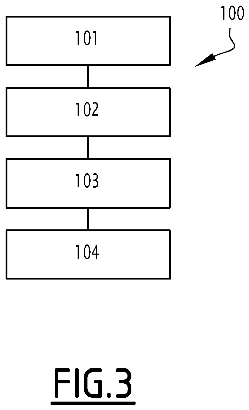

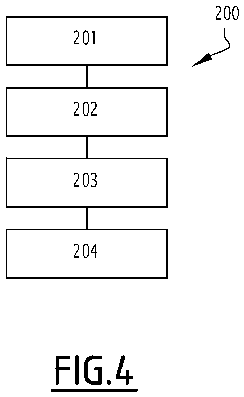

Dans un mode de réalisation le bloc de contrôle 11 comprend un microprocesseur 13 et une mémoire 17. Tout ou partie au moins des traitements réalisés par le bloc de contrôle 11, notamment ceux décrits ci-dessous en référence aux figures 3 et 4, sont mis en œuvre suite à l'exécution, sur le microprocesseur 13, d'instructions logicielles correspondantes stockées dans la mémoire 17.

Dans des modes de réalisation, certains au moins des traitements réalisés par le bloc applicatif 9 et/ou par le bloc de traitement 12, et plus généralement par la station 10, notamment ceux décrits ci-dessous, sont mis en œuvre suite à l'exécution, sur le microprocesseur 13, d'instructions logicielles correspondantes stockées dans la mémoire 17.

La table de topologie 14 mémorisée dans chaque nœud comporte des informations de routage permettant au nœud de répondre à ces questions, lorsque des données sont à transmettre vers un destinataire final :
- sur quel nœud se trouve le destinataire final des données ;
- quelle est la meilleure route pour joindre ce nœud (optionnellement cette route est fonction du type de données à transmettre) et donc vers quel nœud voisin (i.e. vers quel nœud du réseau suffisamment proche pour qu'une liaison radio directe puisse être établie) retransmettre un message de données pour que ce dernier soit acheminé de proche en proche vers le destinataire final.

La table de topologie 14 mémorisée dans un nœud 10 doit être mise à jour régulièrement pour tenir compte de l'évolution de la topologie.

Pour ce faire, chaque nœud 10 émet régulièrement un ensemble d'éléments de topologie qui peuvent être de nature différente suivant les protocoles de découverte de topologie, comprenant par exemple : l'identifiant unique du nœud 10 sur le réseau, les identifiants des nœuds se situant à un bond (en anglais « hop ») du nœud émetteur, l'état de la liaison radio (débit, latence ...) entre le nœud émetteur et chaque nœud à un bond, les sous-réseaux qui sont raccordés au nœud 10.

L'envoi de cet ensemble d'éléments de topologie par un nœud 10 est déclenché de façon diverse selon les protocoles de découverte de topologie : toutes les périodes de durée T (avec la valeur T préalablement fixée et par exemple pouvant aller de quelques secondes à plusieurs minutes) et/ou à chaque fois que le nœud 10 est mis en service et/ou à chaque fois qu'un nœud à un bond apparaît ou disparaît etc.

Ces éléments de topologies sont utilisés par les protocoles de routage pour actualiser les tables de routage des nœuds, suivant des méthodes variées.

Par exemple, dans un type particulier de routage proactif, comme OLSR et OSPF, chaque nœud transmet régulièrement à ses voisins de rang un (à un bond) ses propres éléments de topologie et, dans le cas particulier où un nœud 10 est en frontière de plusieurs sous-réseaux, il peut également retransmettre entre ses différents sous-réseaux les éléments de topologie reçus d'autres nœuds du réseau. Ceci permet ainsi à chaque nœud d'établir une topologie du réseau 1 de rang N (à N bonds). Cette topologie est exploitée par les protocoles de routage pour générer une table de routage locale, spécifique d'un nœud particulier, et qui indique l'identifiant du nœud voisin à qui le nœud considéré doit retransmettre un message de données adressé à un nœud destinataire final. La table de routage locale d'un nœud associe donc l'identifiant d'un destinataire final à l'identifiant d'un nœud de rang un (à un bond).

Dans un mode de réalisation de l'invention, un ensemble d'étapes 100 sont réalisées par la station 10, en référence à la figure 3.

Dans une phase préalable, une base de données, dite base de données de traduction, TR 16 associant des données applicatives à des éléments de topologie fictifs est constituée et est mémorisée dans les stations 10 mettant en œuvre l'invention. Suivant les modes de réalisation, la base de données TR 16 est adaptée pour associer de façon automatique des données applicatives à des éléments de topologie fictifs et inversement. Les éléments de topologie fictifs sont par exemple des nœuds fictifs, et/ou des liens de radiocommunication fictifs et/ou des sous-réseaux fictifs du réseau 1 et/ou encore des modifications de caractéristiques d'éléments de topologie réels qui figurent bien dans le réseau 1 (par exemple, modification du débit d'un lien radio 5). La base TR 16 comprend par exemple des règles de traduction entre les données applicatives et les éléments fictifs. La traduction réalisée par l'intermédiaire de la base TR 16 traduit des données applicatives différentes, par exemple des statuts distincts, par des éléments de topologie fictifs distincts, et elle est réversible, en cela qu'elle traduit à l'inverse les éléments de topologies distincts par les données applicatives distincts et permet de retrouver ainsi les données applicatives d'origine.

Une information complexe peut être traduite en une combinaison d'éléments de topologie fictifs.

Exemple 1 : des données applicatives consistant en une information de statut, par exemple selon laquelle un soldat (doté d'une station mobile constituant un nœud du réseau 1) est embarqué dans un véhicule (doté lui d'une autre station mobile constituant un autre nœud du réseau 1) sont encodées dans la base TR 16 en la création d'un lien radio fictif sur un réseau entre le nœud associé au véhicule et celui associé au soldat.

Exemple 2 : une valeur numérique identifiant un plan d'action qui est à appliquer par tous les intervenants du réseau 1 dès réception est encodée dans la base TR 16 sous forme d'un nœud fictif appartenant au réseau 1.

Exemple 3 : l'intérêt d'un utilisateur d'un nœud 10 du réseau 1 pour participer à une messagerie de groupe est encodé dans la base TR 16 sous la forme d'un lien de ce nœud 10 vers un nœud fictif. L'ensemble des liens de topologie vers ce nœud fictif permet de déduire l'ensemble des nœuds 10 ayant un utilisateur participant au groupe de messagerie considéré.

Exemple 4 : l'exemple 3 précédent peut être complété dans le cas où la participation au groupe de messagerie nécessite l'accord préalable d'un nœud particulier du réseau. Le nœud 10 du réseau 1 devant fournir son accord pour l'entrée dans le groupe de messagerie est encodé dans la base TR 16 sous la forme d'un deuxième lien de ce nœud vers un autre nœud fictif. La diffusion de ce lien dans la topologie permet à chaque nœud de découvrir le nœud du réseau devant être contacté avant d'entrer dans le groupe de messagerie considéré.

La traduction en combinaison d'éléments topologiques est dépendante du type de protocole de routage et de ses capacités, et évidemment peut prendre des formes extrêmement variées. Ces traductions sont définies dans la base de règles TR 16 connues du nœud émetteur, qui peuvent être mises en œuvre automatiquement selon l'invention et connues également des destinataires finals des données applicatives ainsi transmises selon l'invention.

Dans une étape 101, un applicatif 15 s'exécutant dans la station 10 génère des données applicatives.

Ces données applicatives sont à transmettre à un ou plusieurs destinataires du réseau, voire à tous (dans un mode de réalisation, des règles limitent le relayage ou un filtrage sélectif est effectué en réception, par exemple par le bloc de contrôle 11, avant remise au bloc applicatif des stations recevant les données applicatives).

Ces données applicatives peuvent être de nature très variée. Par exemple, ces données applicatives sont du type :
- l'état et la localisation (au sens du nœud hébergeur) d'un service applicatif ;
- le mode de fonctionnement d'un applicatif ;
- l'appartenance d'un nœud à une communauté d'intérêt (groupe de nœuds) ;
- le rôle des nœuds du réseau dans la mise en œuvre d'un service applicatif (par exemple pour identifier un nœud maitre pour un fonctionnement en mode maitre/esclave) ;
- l'accès à une ressource (un service logiciel, un équipement matériel, ...) qui n'est pas sur le réseau mais pour laquelle un ou plusieurs nœuds du réseau sont des passerelles permettant d'accéder à ces ressources depuis les nœuds du réseau.

Ces données applicatives ainsi générées sont transmises par l'applicatif 15 au bloc de contrôle 11.

Dans une étape 102, les données applicatives reçues sont traduites par le bloc de contrôle 11 en un ou plusieurs éléments de topologie fictifs, sur la base des règles de traduction définies dans la base de règles TR 16, qui associe des données applicatives à des éléments de topologie fictifs.

Dans une étape 103, le bloc de contrôle 11 intègre ces éléments de topologie fictifs à l'ensemble d'éléments de topologie à transmettre par la station 10 suivant le protocole de routage en vigueur dans le réseau 1, comportant les éléments de topologie « réels » du réseau, indiquant notamment quels sont les nœuds à un bond, les caractéristiques des liens radios entre la station 10 et chacun de ces nœuds à un bond, indiquant si la station 10 est une passerelle vers d'autres sous-réseaux etc.

Dans une étape 104, le bloc de contrôle 11 délivre l'ensemble d'éléments de topologie au bloc de traitement 12 pour émission de l'ensemble d'éléments de topologie ainsi complétée à destination des nœuds voisins, puis le bloc de traitement 12 émet cet ensemble d'éléments de topologie complété conformément au protocole de routage.

Considérons à présent une station 10 constituant un nœud du réseau 1 et, qui recevant un ensemble d'éléments de topologie transmis comme indiqué en référence à la figure 3, met alors en œuvre l'ensemble d'étapes 200 décrit en référence à la figure 4.

Dans une étape 201, le bloc de traitement 12 de la station 10 considérée reçoit donc le signal transportant un ensemble d'éléments de topologie, effectue des traitements des couches basses nécessaires pour extraire l'ensemble d'éléments de topologie et transmet ce dernier au bloc de contrôle 11.

Dans une étape 202, le bloc de contrôle 11 analyse l'ensemble d'éléments de topologie reçu et identifie, en fonction des informations de la base de données TR 16, si cet ensemble d'éléments de topologie comporte des éléments de topologie fictifs selon l'invention.

Dans le cas négatif, l'ensemble d'éléments de topologie reçu est directement traité conformément au protocole de routage et la table de topologie 14 est mise à jour de manière classique en fonction des éléments de topologie reçus (traitement en couche réseau).

Dans le cas positif, dans une étape 203, les éléments fictifs identifiés sont extraits de l'ensemble d'éléments de topologie par le bloc de contrôle 11, ils sont traduits par le bloc de contrôle 11 en données applicatives en fonction du contenu de la base TR 16, puis sont délivrées par le bloc de contrôle 11 au bloc applicatif 9 qui les délivre à l'applicatif 15 auquel ces données sont destinées, puis ces données applicatives sont traitées par l'applicatif 15 (traitement en couches hautes) (par exemple, une donnée applicative extraite de la topologie est transmise à chaque applicatif ayant préalablement manifesté son intérêt pour cette donnée : pour ce faire, chaque donnée applicative possède un identifiant unique et cet identifiant permet d'associer une donnée applicative à des règles de distribution aux applicatifs dans la base TR 16).

Dans une étape 204, l'ensemble d'éléments de topologie après cette extraction ne comportant donc plus que des éléments de topologie réels est alors exploité par la station 10 conformément au protocole de routage classique : la table de topologie 14 est mise à jour en fonction de ces éléments de topologie, la topologie réelle est ainsi mise à jour.

Par ailleurs, si la station 10 ayant reçu l'ensemble d'éléments de topologie est un nœud relais entre un premier sous-réseau et un second sous-réseau avec des protocoles de routage distincts par exemple, dans un mode de réalisation, les éléments fictifs de topologie sont extraits, traduits par le bloc de contrôle 11 en données applicatives conformément à la base TR 16 du premier sous-réseau dont les données applicatives proviennent. Puis suivant les cas, seuls les éléments réels de topologie sont relayés à destination du second sous-réseau après transformation pour les rendre compatibles du protocole de routage du second sous-réseau ou bien, en outre, les données applicatives sont re-traduites en éléments fictifs de topologie conformément à une autre base de traduction TR (non illustrée) entre données applicatives et éléments fictifs de topologie, propre au second sous-réseau et insérées dans l'ensemble d'éléments de topologie par le bloc de contrôle 11, puis le bloc de traitement 12 transmet l'ensemble d'éléments de topologie ainsi complété dans le second sous-réseau conformément au protocole de routage en œuvre dans ce second sous-réseau.

Si la station 10 ayant reçu l'ensemble d'élément de topologie est un nœud relais pour le protocole de découverte de topologie, l'ensemble d'éléments de topologie tel que reçu est transmis par le bloc de traitement 12 conformément au protocole de routage.

On notera que certaines informations fictives peuvent être conservées dans la topologie réelle selon leur utilité.

La conservation d'une information fictive dans la topologie réelle permet d'influer sur la table de topologie 14 ce qui autorise alors, à titre d'exemple :
- de créer une route vers un nœud bien que celui-ci ne soit pas réellement présent dans le réseau ; dans ce cas de figure, les données transmises vers ce nœud sont acheminées jusqu'au nœud du réseau l'ayant introduit dans la topologie du réseau via un lien fictif vers ce nœud (ex : cas d'un nœud véhicule qui annonce un lien fictif vers le nœud d'un soldat qui est embarqué à son bord, le nœud véhicule reçoit les données à destination du nœud du soldat et ce dernier les reçoit même si ses propres moyens de radiocommunication ne sont pas opérationnels) ;
- de modifier la route permettant d'atteindre un nœud pour, par exemple, emprunter une route ne correspondant pas à celle qui serait celle utilisée si seuls des éléments de topologies réels étaient pris en compte dans la table de routage ;

Ainsi les protocoles de routage eux-mêmes ne sont pas modifiés par cette insertion d'éléments fictifs de topologie, insertion constituant une modulation de la topologie réelle du réseau par des éléments fictifs de topologie véhiculant l'information applicative.

Cette modulation exploite uniquement les éléments manipulés nativement par les protocoles de routage. De même, le calcul de route n'est pas perturbé par la modulation des données de topologie.

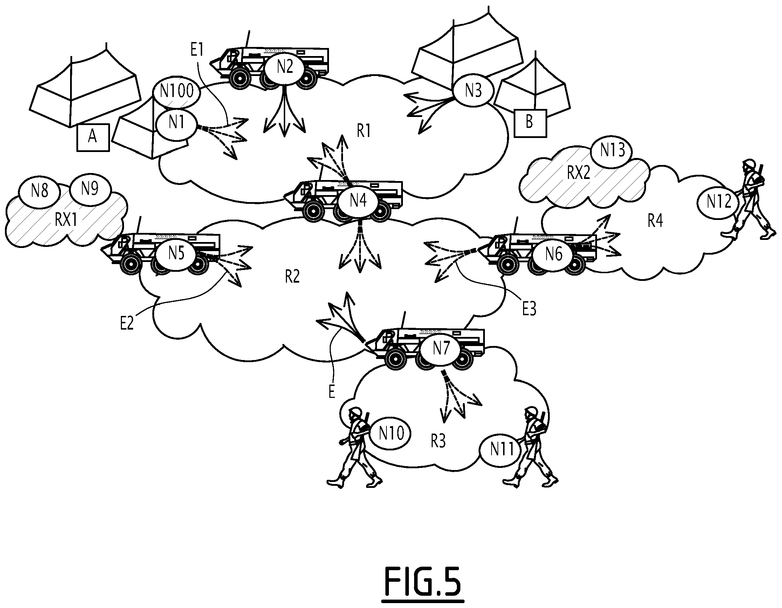

En référence à la figure 5, un réseau ad hoc mettant en œuvre un mode de réalisation de l'invention est illustré, comprenant des sous-réseaux déployés R1, R2, R3, et R4 mettant en œuvre des protocoles de radiocommunication, par exemple des protocoles de routage distincts, et comportant en outre 13 stations de radiocommunication constituant des nœuds ad hoc du réseau, identifiés N1 à N13, et mettant en œuvre l'invention.

Les nœuds N1 et N3 sont des nœuds de radiocommunication localisés dans des postes de commandement, les nœuds N2, N4-N7 sont localisés dans des véhicules et leurs sont associés tandis que les nœuds N8-N12 sont utilisés par des soldats. Les nœuds N4, N6 et N7 sont des nœuds relais entre sous-réseaux.

Tout d'abord, événement E1 : l'applicatif de la station N1 ayant à faire savoir qu'il est en charge de la fonction de commandement, cette information est traduite en éléments de topologie fictifs de la façon suivante : la station N1 module les éléments de topologie qu'elle transmet par l'insertion dans la topologie réelle d'un élément fictif : un nœud N100, annoncé dans l'ensemble d'éléments de topologie comme joignable via le nœud N1.

Evénement E2 : l'applicatif embarqué de la station N5 veut faire savoir que les soldats porteurs des stations N8 et N9 sont à bord du véhicule. Cette information est traduite en éléments de topologie fictifs de la façon suivante : la station N5 transmet une topologie modulée par l'insertion dans la topologie réelle d'un élément fictif : le réseau RX1, avec indication également dans la topologie que les nœuds N8 et N9 sont réputés raccordés au réseau RX1.

Evénement E3 : L'applicatif de la station N6 veut faire savoir qu'un soldat, porteur de la station N13, est à bord du véhicule dans lequel est localisée N6. La station N6 annonce une topologie modulée dans laquelle la station N12 est raccordée au sous-réseau R4 et la station N13 est réputée raccordée à RX2, le sous-réseau RX2 et ce lien entre N13 et RX2 étant donc les éléments fictifs de topologie insérés.

Evénement E : la station N7 transmet l'ensemble des éléments de topologie sans éléments fictifs insérés, selon lesquels les stations N10 et N11 sont raccordées au sous-réseau R3.

Les flèches avec tirets signalent la transmission d'éléments de topologie modifiés suivant l'invention. Les nœuds fictifs et sous-réseaux fictifs sont hachurés.

Les stations des individus embarquées dans les véhicules peuvent être mises hors service.

En réception, toutes les stations en service du réseau parmi N1 à N13 démodulent les informations de topologie, et leurs applicatifs respectifs reçoivent donc, après traduction sur réception, les informations applicatives suivantes :
- la fonction de commandement est assurée par le site de la station N1 ;
- les soldats porteurs des stations N10, N11 et N12 sont en situation « débarqué » ;
- les soldats porteurs des stations N8, N9 et N13 sont en situation « embarqué » (et donc, si ces stations sont hors service, cela indique que ces soldats sont joignables via la station associée au véhicule ayant embarqué le soldat).

Tout nouvel entrant sur un des sous-réseaux R1, R2, R3 ou R4 acquiert la connaissance des mêmes informations applicatives au travers de la découverte de la topologie, sans que les émetteurs de ces informations applicatives n'aient à les réémettre via les couches hautes.

En cas de scission, puis de fusion, d'un des sous-réseaux R1, R2, R3 ou R4, chaque nœud du réseau acquiert ou réactualise les informations applicatives des nœuds du réseau qui n'étaient plus accessibles lorsque le réseau était scindé. Là aussi ceci s'opère au travers de la découverte de topologie et sans que les émetteurs de ces informations applicatives n'aient à les réémettre via les couches hautes.

L'invention propose ainsi de moduler les données applicatives dans la topologie du réseau, puis de les transmettre via les mécanismes intrinsèques aux protocoles de découverte de topologie, sans modification de ceux-ci (pas de champs supplémentaires, pas d'évolution des structures).

Les caractéristiques et les contraintes des protocoles de découverte de topologie sont prises en compte pour choisir le type de données applicatives prises en compte selon l'invention.

Une donnée applicative éligible selon le procédé de l'invention est typiquement :
- de taille limitée (exemples: un état, une valeur numérique), par exemple entre 1 et 4 octets ;
- à destination de plusieurs participants (potentiellement de tous), qui ne sont pas forcément tous connexes à l'instant T ;
- de fréquence de changement compatible avec les caractéristiques des mécanismes de découverte et d'entretien de la topologie utilisés dans le réseau.

Le fait de véhiculer de l'information applicative via les protocoles de découverte permet :
- d'accélérer certains échanges applicatifs en profitant des mécanismes de découverte de topologie : un nœud va recevoir des informations applicatives au même rythme qu'il découvre la topologie, alors que selon l'art antérieur, les échanges au niveau de la topologie devaient d'abord avoir lieu avant que les échanges applicatifs ne puissent être mis en œuvre ;
- de décharger les applicatifs des tâches de répétition des envois liés aux changements de topologie fréquents dans les situations de réseaux ad hoc, ces répétitions étant intrinsèques à l'entretien de la topologie ;
- de réduire la charge de transmission de données en évitant le recours aux protocoles applicatifs pour des informations « courtes » (statut,...)

Selon l'invention, un nœud isolé se raccordant au réseau reçoit toutes les informations applicatives diffusées selon le procédé dès son entrée dans la topologie de routage du réseau. Par extension, les avalanches d'échanges applicatifs suite à des fusions ou des scissions du réseau connues dans les réseaux de l'art antérieur sont ainsi limitées.

Dans un autre mode de réalisation, le bloc de contrôle 11 est réalisé sous forme d'un composant logique programmable, tel qu'un FPGA (de l'anglais *Field Programmable Gate Array),* ou encore sous forme d'un circuit intégré dédié, tel qu'un ASIC (de l'anglais *Applications Specific Integrated Circuit).*

Dans un mode de réalisation de l'invention, le bloc applicatif 9 ne fait pas partie du nœud 10, et les applicatifs s'exécutent sur un équipement distinct (typiquement un applicatif s'exécutant sur un ordinateur relié à la station par un câble réseau filaire).

## Revendications

1. Procédé de traitement de données, dans un réseau ad hoc de radiocommunication (1) comprenant un ensemble de stations de radiocommunication (10) constituant chacune un nœud du réseau ad hoc, selon lequel :
- au moins une station exécute une fonction de découverte dynamique de topologie selon un protocole de routage mis en œuvre dans le réseau ad hoc, comprenant l'émission depuis la station d'un ensemble d'éléments de topologie destiné à la mise à jour de la topologie du réseau ; et
- au moins un applicatif génère des données applicatives destinées à être transmises par ladite station à destination d'au moins une autre station du réseau, ledit procédé étant **caractérisé en ce qu'**il comprend les étapes suivantes :
- réception des données applicatives générées par l'applicatif par un bloc électronique de traitement (11) de la station et traduction, par ledit bloc électronique de traitement, desdites données applicatives en éléments de topologie fictifs selon une base de règles (16) prédéterminées mettant en correspondance des données applicatives et des éléments fictifs de topologie ;
- insertion des éléments de topologie fictifs dans ledit ensemble d'éléments de topologie, ledit ensemble d'éléments de topologie émis par la station comprenant lesdits éléments de topologie fictifs insérés,
un élément fictif tel qu'inséré étant un élément parmi un nœud fictif, un lien de communication fictif, un réseau de communication fictif, une modification fictive d'au moins une caractéristique d'un élément de topologie réel parmi un nœud, un lien et un réseau de communication,
les données applicatives étant du type :
- un état et une localisation d'un service applicatif ;
- un mode de fonctionnement de l'applicatif ;
- une appartenance d'un nœud à un groupe de nœuds ;
- un rôle des nœuds du réseau dans la mise en œuvre d'un service applicatif ; ou
- un accès à une ressource qui n'est pas sur le réseau mais pour laquelle un ou plusieurs nœuds du réseau sont des passerelles permettant d'accéder à ces ressources depuis les nœuds du réseau.

2. Procédé de traitement de données dans un réseau ad hoc de radiocommunication (1) selon la revendication 1, selon lequel le réseau est organisé selon une architecture en couches comprenant des couches hautes et des couches basses, et selon lequel :
- l'applicatif est géré au niveau des couches hautes ;
- la fonction de découverte dynamique de topologie est gérée au niveau des couches basses.

3. Programme d'ordinateur destiné à une station (10) émettrice/réceptrice radiofréquence, adaptée pour constituer un nœud d'un réseau, ledit programme comprenant des instructions pour mettre en œuvre les étapes d'un procédé selon la revendication 1 ou 2 lors d'une exécution du programme par des moyens de traitement de ladite station.

4. Procédé de traitement de données, dans un réseau ad hoc de radiocommunication (1) comprenant un ensemble de stations de radiocommunication (10) constituant chacune un nœud du réseau ad hoc, selon lequel
- au moins une station exécute une fonction de découverte dynamique de topologie selon un protocole de routage mis en œuvre dans le réseau ad hoc, comprenant la réception d'un ensemble d'éléments de topologie destiné à la mise à jour de la topologie du réseau ; et
- au moins un applicatif reçoit via ladite station des données applicatives provenant d'au moins une autre station du réseau,
ledit procédé étant **caractérisé en ce qu'**il comprend les étapes suivantes :
- extraction, par un bloc électronique de traitement (11) de la station, d'éléments de topologie fictifs depuis ledit ensemble d'éléments de topologie reçus et traduction desdits éléments de topologie fictifs en données applicatives par ledit bloc électronique de traitement de la station, en fonction d'une base de règles prédéterminées (16) mettant en correspondance des données applicatives et des éléments fictifs de topologie ;
- fourniture des données applicatives à l'applicatif par le bloc électronique de traitement,
un élément fictif étant un élément parmi un nœud fictif, un lien de communication fictif, un réseau de communication fictif, une modification fictive d'au moins une caractéristique d'un élément de topologie réel parmi un nœud, un lien et un réseau de communication,
les données applicatives étant du type :
- un état et une localisation d'un service applicatif ;
- un mode de fonctionnement de l'applicatif ;
- une appartenance d'un nœud à un groupe de nœuds ;
- un rôle des nœuds du réseau dans la mise en œuvre d'un service applicatif ;
un accès à une ressource qui n'est pas sur le réseau mais pour laquelle un ou plusieurs nœuds du réseau sont des passerelles permettant d'accéder à ces ressources depuis les nœuds du réseau.

5. Programme d'ordinateur destiné à une station (10) émettrice/réceptrice radiofréquence, adaptée pour constituer un nœud d'un réseau, ledit programme comprenant des instructions pour mettre en œuvre les étapes d'un procédé selon la revendication 4 lors d'une exécution du programme par des moyens de traitement de ladite station.

6. Station de radiocommunication (10) constituant un nœud d'un réseau ad hoc (1) de radiocommunication, ladite station étant adaptée pour exécuter une fonction de découverte dynamique de topologie selon un protocole de routage mis en œuvre dans le réseau ad hoc, comprenant l'émission depuis la station d'un ensemble d'éléments de topologie destiné à la mise à jour de la topologie du réseau ;
ladite station étant **caractérisée en ce qu'**elle comprend une base de règles prédéterminées (16) mettant en correspondance des données applicatives et des éléments fictifs de topologie, la station comprenant en outre un bloc électronique de traitement adapté pour recevoir des données applicatives générées par un applicatif et destinées à être transmises par ladite station à destination d'au moins une autre station du réseau pour traduire lesdites données applicatives en éléments de topologie fictifs selon ladite base de règles et pour insérer les éléments de topologie fictifs dans ledit ensemble d'éléments de topologie ; ledit ensemble d'éléments de topologie émis par la station comprenant lesdits éléments de topologie fictifs insérés,
un élément fictif tel qu'inséré étant un élément parmi un nœud fictif, un lien de communication fictif, un réseau de communication fictif, une modification fictive d'au moins une caractéristique d'un élément de topologie réel parmi un nœud, un lien et un réseau de communication,
les données applicatives étant du type :
- un état et une localisation d'un service applicatif ;
- un mode de fonctionnement de l'applicatif ;
- une appartenance d'un nœud à un groupe de nœuds ;
- un rôle des nœuds du réseau dans la mise en œuvre d'un service applicatif ;
un accès à une ressource qui n'est pas sur le réseau mais pour laquelle un ou plusieurs nœuds du réseau sont des passerelles permettant d'accéder à ces ressources depuis les nœuds du réseau.

7. Station de radiocommunication (10) constituant un nœud d'un réseau ad hoc (1) de radiocommunication, adaptée pour exécuter une fonction de découverte dynamique de topologie selon un protocole de routage mis en œuvre dans le réseau ad hoc, comprenant la réception par la station d'un ensemble d'éléments de topologie destiné à la mise à jour de la topologie du réseau ; ladite station étant **caractérisée en ce qu'**elle comprend une base de règles prédéterminées (16) mettant en correspondance des données applicatives et des éléments fictifs de topologie et un bloc électronique de traitement (11) adapté pour extraire des éléments de topologie fictifs dudit ensemble d'éléments de topologie reçus et pour traduire lesdits éléments de topologie fictifs extraits en données applicatives en fonction de ladite base de règles ; ledit bloc électronique de traitement étant adapté pour fournir les données applicatives à destination d'un applicatif,
un élément fictif étant un élément parmi un nœud fictif, un lien de communication fictif, un réseau de communication fictif, une modification fictive d'au moins une caractéristique d'un élément de topologie réel parmi un nœud, un lien et un réseau de communication,
les données applicatives étant du type :
- un état et une localisation d'un service applicatif ;
- un mode de fonctionnement de l'applicatif ;
- une appartenance d'un nœud à un groupe de nœuds ;
- un rôle des nœuds du réseau dans la mise en œuvre d'un service applicatif ;
un accès à une ressource qui n'est pas sur le réseau mais pour laquelle un ou plusieurs nœuds du réseau sont des passerelles permettant d'accéder à ces ressources depuis les nœuds du réseau.

## Patentansprüche

1. Datenverarbeitungsverfahren in einem Ad-hoc-Funkkommunikationsnetz (1), umfassend eine Gruppe von Funkstationen (10), die jeweils einen Knoten des Ad-hoc-Netzes bilden, wobei:
- mindestens eine Station eine Funktion zur dynamischen Topologieerkennung gemäß einem in dem Ad-hoc-Netz implementierten Routingprotokoll ausführt, umfassend das Senden eines Satzes von Topologieelementen von der Station, die zu der Aktualisierung der Netzwerktopologie bestimmt sind; und
- mindestens ein Anwendungsprogramm Anwendungsdaten erzeugt, die dazu bestimmt sind, von dieser Station an mindestens eine andere Station des Netzwerks übertragen zu werden,
wobei das Verfahren **dadurch gekennzeichnet ist, dass** es die folgenden Schritte umfasst:
- Empfangen der durch das Anwendungsprogramm erzeugten Anwendungsdaten durch einen elektronischen Verarbeitungsblock (11) der Station und Übersetzung der Anwendungsdaten in fiktive Topologieelemente durch den elektronischen Verarbeitungsblock gemäß einer Basis von vorbestimmten Regeln (16), die die Anwendungsdaten und die fiktiven Topologieelemente in Übereinstimmung bringen;
- Einfügen der fiktiven Topologieelemente in den Satz von Topologieelementen, der Satz von Topologieelementen, der von der Station gesendet wird, umfassend die eingefügten fiktiven Topologieelemente,
wobei ein fiktives Element, wie es eingefügt ist, ein Element ist, ausgewählt aus einem fiktiven Knoten, einer fiktiven Kommunikationsverbindung, einem fiktiven Kommunikationsnetzwerk, einer fiktiven Modifikation von mindestens einem Merkmal eines realen Topologieelements aus einem Knoten, einer Verbindung und einem Kommunikationsnetzwerk,
wobei die Anwendungsdaten von einem folgenden Typ sind:
- einem Status und einem Standort eines Anwendungsdienstes;
- einer Betriebsart des Anwendungsprogramms;
- einer Zugehörigkeit eines Knotens zu einer Gruppe von Knoten;
- einer Rolle der Netzwerkknoten bei der Implementierung eines Anwendungsdienstes;
wobei
- ein Zugriff auf eine Ressource, die nicht in dem Netzwerk ist, für die aber ein oder mehrere Netzwerkknoten Gateways sind, einen Zugriff auf diese Ressourcen von den Netzwerkknoten aus ermöglichen.

2. Datenverarbeitungsverfahren in einem Ad-hoc-Funkkommunikationsnetz (1) nach Anspruch 1, wobei das Netzwerk in einer Schichtarchitektur umfassend hohe und niedrige Schichten organisiert ist, und wobei:
- das Anwendungsprogramm auf Ebene der oberen Schichten verwaltet wird;
- die Funktion der dynamischen Topologieerkennung auf der Ebene der unteren Schichten verwaltet wird.

3. Computerprogramm, das für eine Funkfrequenz-Sende-/Empfangsstation (10) bestimmt ist, die angepasst ist, um einen Knoten eines Netzwerks zu bilden, das Programm umfassend Anweisungen zum Implementieren der Schritte eines Verfahrens nach Anspruch 1 oder 2 bei einer Ausführung des Programms durch eine Verarbeitungseinrichtungen der Station.

4. Datenverarbeitungsverfahren, in einem Ad-hoc-Funkkommunikationsnetz (1), umfassend eine Gruppe von Funkstationen (10), die jeweils einen Knoten des Ad-hoc-Netzes bilden, gemäß dem
- mindestens eine Station eine Funktion zur dynamischen Topologieerkennung gemäß einem in dem Ad-hoc-Netz implementierten Routingprotokoll ausführt, umfassend das Empfangen eines Satzes von Topologieelementen, die zu der Aktualisierung der Netzwerktopologie bestimmt sind; und
- mindestens ein Anwendungsprogramm, über die Station Anwendungsdaten von mindestens einer anderen Station in dem Netzwerk empfängt,
wobei das Verfahren **dadurch gekennzeichnet ist, dass** es die folgenden Schritte umfasst:
- Extrahieren, elektronischen Verarbeitungsblock (11) der Station, von fiktiven Topologieelementen aus dem Satz von empfangenen Topologieelementen und Übersetzen der fiktiven Topologieelemente in Anwendungsdaten durch den elektronischen Verarbeitungsblock der Station abhängig von einer Basis von vorbestimmten Regeln (16), die Anwendungsdaten und fiktive Topologieelemente in Übereinstimmung bringen;
- Bereitstellen der Anwendungsdaten für das Anwendungsprogramm durch den elektronischen Verarbeitungsblock,
wobei ein fiktives Element ein Element ist, ausgewählt aus einem fiktiven Knoten, einer fiktiven Kommunikationsverbindung, einem fiktiven Kommunikationsnetzwerk, einer fiktiven Modifikation von mindestens einem Merkmal eines realen Topologieelements aus einem Knoten, einer Verbindung und einem Kommunikationsnetzwerk,
wobei die Anwendungsdaten von einem folgenden Typ sind:
- einem Status und einem Standort eines Anwendungsdienstes;
- einer Betriebsart des Anwendungsprogramms;
- einer Zugehörigkeit eines Knotens zu einer Gruppe von Knoten;
- einer Rolle der Netzwerkknoten bei der Implementierung eines Anwendungsdienstes;
ein Zugriff auf eine Ressource, die nicht in dem Netzwerk ist, für die aber ein oder mehrere Netzwerkknoten Gateways sind, einen Zugriff auf diese Ressourcen von den Netzwerkknoten aus ermöglichen.

5. Computerprogramm, das für eine Funkfrequenz-Sende-/Empfangsstation (10) bestimmt ist, die angepasst ist, um einen Knoten eines Netzwerks zu bilden, das Programm umfassend Anweisungen zum Implementieren der Schritte eines Verfahrens nach Anspruch 4 bei einer Ausführung des Programms durch eine Verarbeitungseinrichtungen der Station.

6. Funkkommunikationsstation (10), die einen Knoten eines Ad-hoc-Funkkommunikationsnetz (1) bildet, wobei die Station angepasst ist, um eine Funktion zur dynamischen Topologieentdeckung gemäß einem in dem Ad-hoc-Netz implementierten Routingprotokoll auszuführen, die umfassend das Senden einer Gruppe von Topologieelementen, die zur Aktualisierung der Topologie des Netzes bestimmt sind, von der Station aus;
wobei die Station **dadurch gekennzeichnet ist, dass** sie eine Basis von vorbestimmten Regeln (16) umfasst, die Anwendungsdaten und fiktive Topologieelemente in Übereinstimmung bringen, die Station ferer umfassend einen elektronischen Verarbeitungsblock, der angepasst ist, um Anwendungsdaten zu empfangen, die von einem Anwendungsprogramm erzeugt werden und dazu bestimmt sind, von der Station an mindestens eine andere Station des Netzwerks übertragen zu werden, um die Anwendungsdaten gemäß der Regelbasis in fiktive Topologieelemente zu übersetzen und um die fiktiven Topologieelemente in den Satz von Topologieelementen einzufügen; der von der Station gesendete Satz von Topologieelementen umfassend die eingefügten fiktiven Topologieelemente,
wobei ein fiktives Element, wie es eingefügt ist, ein Element ist, ausgewählt aus einem fiktiven Knoten, einer fiktiven Kommunikationsverbindung, einem fiktiven Kommunikationsnetzwerk, einer fiktiven Modifikation von mindestens einem Merkmal eines realen Topologieelements aus einem Knoten, einer Verbindung und einem Kommunikationsnetzwerk, wobei die Daten vom folgenden Typ sind:
- einem Zustand und einem Standort eines Anwendungsdienstes;
- einem Betriebsmodus der Anwendung;
- einer Zugehörigkeit eines Knotens zu einer Gruppe von Knoten;
- einer Rolle der Knoten des Netzwerks bei der Implementierung eines Anwendungsdienstes;
wobei ein Zugriff auf eine Ressource, die nicht in dem Netzwerk ist, für die aber ein oder mehrere Netzwerkknoten Gateways sind, einen Zugriff auf diese Ressourcen von den Netzwerkknoten aus ermöglicht.

7. Funkkommunikationsstation (10), die einen Knoten eines Ad-hoc-Funkkommunikationsnetzwerks (1) darstellt, die angepasst ist, um eine Funktion zur dynamischen Topologieentdeckung gemäß einem in dem Ad-hoc-Netz implementierten Routingprotokoll durchzuführen, umfassend den Empfang Senden einer Gruppe von Topologieelementen, die zur Aktualisierung der Topologie des Netzes bestimmt sind, durch die Station; wobei die Station **dadurch gekennzeichnet ist, dass** sie eine Basis von vorbestimmten Regeln (16), die Anwendungsdaten und fiktive Topologieelemente in Übereinstimmung bringen, und einen elektronischen Verarbeitungsblock (11), der geeignet ist, um fiktive Topologieelemente aus dem Satz von empfangenen Topologieelementen zu extrahieren und die extrahierten fiktiven Topologieelemente in Anwendungsdaten gemäß der Regelbasis zu übersetzen, umfasst; wobei der elektronische Verarbeitungsblock angepasst ist, um die Anwendungsdaten für ein Anwendungsprogramm bereitzustellen,
wobei ein fiktives Element ein Element ist, ausgewählt aus einem fiktiven Knoten, einer fiktiven Kommunikationsverbindung, einem fiktiven Kommunikationsnetzwerk, einer fiktiven Modifikation von mindestens einem Merkmal eines realen Topologieelements aus einem Knoten, einer Verbindung und einem Kommunikationsnetzwerk,
wobei die Anwendungsdaten von einem folgenden Typ sind:
- einem Status und einem Standort eines Anwendungsdienstes;
- einer Betriebsart des Anwendungsprogramms;
- einer Zugehörigkeit eines Knotens zu einer Gruppe von Knoten;
- einer Rolle der Netzwerkknoten bei der Implementierung eines Anwendungsdienstes;
ein Zugriff auf eine Ressource, die nicht in dem Netzwerk ist, für die aber ein oder mehrere Netzwerkknoten Gateways sind, einen Zugriff auf diese Ressourcen von den Netzwerkknoten aus ermöglichen.

## Claims

1. A data processing method for processing data in an ad hoc radiocommunication network (1) that comprises a set of radiocommunication stations (10) each constituting a node of the ad hoc network, according to which:
- at least one station executes a dynamic topology discovery function in accordance with a routing protocol that is operationally implemented in the ad hoc network, that comprises the sending from the station of a set of topology elements intended for updating the topology of the network; and
- at least one application generates application related data intended to be transmitted by the said station to at least one other station of the network,
the said method being **characterised in that** it comprises the following steps:
- reception of the application related data generated by the application, by an electronic data processing block (11) of the station, and translation by the said electronic data processing block, of the said application related data into fictitious topology related elements in accordance with a database of predetermined rules (16) that ensure the mapping of the application related data with the corresponding fictitious topology related elements;
- insertion of the fictitious topology related elements into the said set of topology related elements, the said set of topology related elements transmitted by the station comprising the said inserted fictitious topology related elements,
a fictitious element as inserted being an element from among a fictitious node, a fictitious communication link, a fictitious communication network, a fictitious modification of at least one characteristic feature of a real topology element from among a node, a link and a communication network
the application data being of the following types:
- a state and a location of an application service;
- a mode of operation of the application;
- a membership of a node in a group of nodes;
- a role of the nodes of the network in the operational deployment of an application service; or
- an access to a resource that is not on the network but for which one or more nodes of the network are gateways to be used for accessing these resources from the nodes of the network.

2. A data processing method for processing data in an ad hoc radiocommunication network (1) according to claim 1, wherein the network is organised according to a layered architecture comprising high layers and low layers, and in accordance with which:
- the application is managed at the level of the high layers; and
- the dynamic topology discovery function is managed at the level of the low layers.

3. A computer program designed for a radiofrequency transmitter-receiver station (10), adapted so as to constitute a node of a network, the said program comprising of instructions for operationally implementing the steps of a method according to claim 1 or 2 during execution of the program by the data processing means of the said station.

4. A data processing method for processing data in an ad hoc radio communication network (1) that comprises a set of radiocommunication stations (10) each constituting a node of the ad hoc network, in accordance with which:
- at least one station executes a dynamic topology discovery function in accordance with a routing protocol operationally implemented in the ad hoc network, that comprises the reception of a set of topology elements intended for updating the topology of the network; and
- at least one application receives via the said station the application data from at least one other station of the network,
the said method being **characterised in that** it comprises the following steps:
- extraction, by an electronic data processing block (11) of the station, of the fictitious topology elements from the said set of topology elements received, and translation of the said fictitious topology elements into application data by the said electronic data processing block of the station, in accordance with a database of predetermined rules (16 ) that ensure the mapping of the application related data with the corresponding fictitious topology related elements;
- providing of application related data to the application by the electronic data processing block
a fictitious element as inserted being an element from among a fictitious node, a fictitious communication link, a fictitious communication network, a fictitious modification of at least one characteristic feature of a real topology element from among a node, a link and a communication network,
the application data being of the following types:
- a state and a location of an application service;
- a mode of operation of the application;
- a membership of a node in a group of nodes;
- a role of the nodes of the network in the operational deployment of an application service; or
- an access to a resource that is not on the network but for which one or more nodes of the network are gateways to be used for accessing these resources from the nodes of the network.

5. A computer program designed for a radiofrequency transmitter-receiver station (10), adapted so as to constitute a node of a network, the said program comprising of instructions for operationally implementing the steps of a method according to claim 4 during execution of the program by the data processing means of the said station.

6. A radio communication station (10) constituting a node of an ad hoc radio communication network (1), the said station being adapted so as to execute a dynamic topology discovery function in accordance with a routing protocol operationally implemented in the ad hoc network, that comprises: the sending from the station of a set of topology elements intended for updating the topology of the network;
the said station being **characterised in that** it comprises a database of predetermined rules (16) that ensure the mapping of the application related data with the corresponding fictitious topology related elements, the station in addition comprising an electronic data processing block adapted to be able: to receive the application data generated by an application and intended to be transmitted by the said station to at least one other station of the network; to translate the said application data into fictitious topology elements in accordance with the said database of rules; and to insert the fictitious topology elements into the said set of topology elements; the said set of topology elements transmitted by the station comprising the said inserted fictitious topology elements
a fictitious element as inserted being an element from among a fictitious node, a fictitious communication link, a fictitious communication network, a fictitious modification of at least one characteristic feature of a real topology element from among a node, a link and a communication network,
the application data being of the following types:
- a state and a location of an application service;
- a mode of operation of the application;
- a membership of a node in a group of nodes;
- a role of the nodes of the network in the operational deployment of an application service; or
- an access to a resource that is not on the network but for which one or more nodes of the network are gateways to be used for accessing these resources from the nodes of the network.

7. A radio communication station (10) constituting a node of an ad hoc radio communication network (1) adapted so as to execute a dynamic topology discovery function in accordance with a routing protocol operationally implemented in the ad hoc network, that comprises the reception by the station of a set of topology elements intended for updating the topology of the network; the said station being **characterised in that** it comprises a database of predetermined rules (16) that ensure the mapping of the application related data with the corresponding fictitious topology related elements, and an electronic data processing block (11) adapted to be able: to extract the fictitious topology elements from the said set of topology elements received, and to translate the said extracted fictitious topology elements into application data in accordance with the said database of rules; the said electronic data processing block being adapted so as to provide the application data to an application
a fictitious element as inserted being an element from among a fictitious node, a fictitious communication link, a fictitious communication network, a fictitious modification of at least one characteristic feature of a real topology element from among a node, a link and a communication network,
the application data being of the following types:
- a state and a location of an application service;
- a mode of operation of the application;
- a membership of a node in a group of nodes;
- a role of the nodes of the network in the operational deployment of an application service; or
- an access to a resource that is not on the network but for which one or more nodes of the network are gateways to be used for accessing these resources from the nodes of the network.
